# EUROPEAN PATENT SPECIFICATION

(11) **EP 3 525 498 B1**
(45) Date of publication and mention of the grant of the patent: **20.04.2022**
(21) Application number: 18155778.6
(22) Date of filing: 08.02.2018
(51) Int. Cl.: H04W 4/02, H04W 4/46, H04W 4/44

(54) **ELECTRONIC DEVICES, SYSTEMS AND METHODS FOR VEHICULAR COMMUNICATION**
ELEKTRONISCHE VORRICHTUNGEN, SYSTEME UND VERFAHREN ZUR FAHRZEUGKOMMUNIKATION
DISPOSITIFS, SYSTÈMES ET PROCÉDÉS ÉLECTRONIQUES DE COMMUNICATION VÉHICULAIRE

(43) Date of publication of application: 14.08.2019
(73) Proprietor: Sony Group Corporation, Tokyo 108-0075 (JP)
(72) Inventor: CRONIE, Harm, 1015 Lausanne (CH); NOLAN, Julian, 1015 Lausanne (CH); KOIKE, Makoto, Tokyo, 108-0075 (JP)
(74) Representative: MFG Patentanwälte Meyer-Wildhagen Meggle-Freund Gerhard PartG mbB

(56) References cited:
- WO-A1-2018/007916
- US-A1- 2007 094 716
- US-A1- 2017 228 731
- SEAN ROWAN ET AL: "Securing Vehicle to Vehicle Communications using Blockchain through Visible Light and Acoustic Side-Channels", ARXIV.ORG, CORNELL UNIVERSITY LIBRARY, 201 OLIN LIBRARY CORNELL UNIVERSITY ITHACA, NY 14853, 9 April 2017 (2017-04-09), XP080761690,
- Greg Bohl ET AL: "PRIVATE BLOCKCHAINS IN AUTOMOTIVE SAFETY", , 18 January 2017 (2017-01-18), XP055406247, Retrieved from the Internet: URL:http://variableauto.com/wp-content/upl oads/2017/01/Private-BlockChain-in-automot ive-Safety.pdf [retrieved on 2017-09-13]
- DORRI ALI ET AL: "BlockChain: A Distributed Solution to Automotive Security and Privacy", IEEE COMMUNICATIONS MAGAZINE, IEEE SERVICE CENTER, PISCATAWAY, US, vol. 55, no. 12, 1 December 2017 (2017-12-01), pages 119-125, XP011674437, ISSN: 0163-6804, DOI: 10.1109/MCOM.2017.1700879 [retrieved on 2017-12-13]
- BENJAMIN LEIDING ET AL: "Self-managed and blockchain-based vehicular ad-hoc networks", PERVASIVE AND UBIQUITOUS COMPUTING, ACM, 2 PENN PLAZA, SUITE 701 NEW YORK NY 10121-0701 USA, 12 September 2016 (2016-09-12), pages 137-140, XP058278942, DOI: 10.1145/2968219.2971409 ISBN: 978-1-4503-4462-3

## Description

### TECHNICAL FIELD

The present disclosure generally pertains to the field of vehicular communication, in particular to an electronic device, a system and a method for vehicular communication.

### TECHNICAL BACKGROUND

Vehicular communication (also called car-to-car communication or vehicle-to-vehicle communication) relates to networks in which vehicles and roadside units are the communicating nodes, providing each other with information, such as safety warnings and traffic information. They can be effective in avoiding accidents and traffic congestion.

Vehicular Ad Hoc Networks (VANETs) are created by applying the principles of Mobile Ad Hoc Networks (MANETs) - the spontaneous creation of a wireless network for data exchange - to the domain of vehicles. Vehicular Ad Hoc Networks are a key component of intelligent transportation systems (ITS).

In Intelligent Vehicular Ad Hoc Networks (InVANET) or intelligent transportation systems (ITS), vehicles are enabled to communicate among themselves (vehicle-to-vehicle, V2V) and via roadside access points (vehicle-to-roadside, V2R) also called Road Side Units (RSUs).

Vehicular communication can contribute to safer and more efficient roads by providing timely information to drivers, and also to make travel more convenient. Vehicular communication also contributes to autonomous and semi-autonomous vehicles.

Although there exist techniques for vehicle communication, it is generally desirable to provide more developed techniques for vehicle communication.

Patent literature US 2017/228731 A1 discloses a Computationally Efficient Transfer Processing and Auditing Apparatuses, Methods and Systems ("CETPA") which transforms transaction record inputs via CETPA components into matrix and list tuple outputs for computationally efficient auditing.

SEAN ROWAN ET AL: "Securing Vehicle to Vehicle Communications using Blockchain through Visible Light and Acoustic Side-Channels", ARXIV.ORG, CORNELL UNIVERSITY LIBRARY, 201 OLIN LIBRARY CORNELL UNIVERSITY ITHACA, NY 14853, 9 April 2017 (2017-04-09), XP080761690, discloses the use of sensing and signaling devices that are commonly integrated into modern vehicles for side-channel communication purposes. Visible light (using a CMOS camera) and acoustic (ultrasonic audio) side channel encoding techniques are proposed, developed and evaluated in this context.

In WO2018007916 A1 discloses a computer-implemented method and corresponding system which is implemented using an electronic ledger such as a blockchain. This may or may not be the Bitcoin blockchain. The invention can be used to implement, execute and/or control the performance of a task or process.

### SUMMARY

According to a first aspect the disclosure provides a system for providing a location based distributed ledger for a vehicle group comprising multiple vehicles and a method of providing a location based distributed ledger to for a vehicle group comprising multiple vehicles, as defined in the appended set of claims.

Further aspects are set forth in the dependent claims, the following description and the drawings.

### BRIEF DESCRIPTION OF THE DRAWINGS

Embodiments are explained by way of example with respect to the accompanying drawings, in which:
Fig. 1 describes an exemplifying situation in which two autonomous vehicles interact with each other and with a road side unit via vehicular communication to find consensus concerning their next actions;
Fig. 2 describes an exemplifying situation in which two autonomous vehicles interact with each other via vehicular communication to find consensus concerning their next actions
Fig. 3 describes a further exemplifying situation in which an autonomous vehicle interacts with a road side unit via vehicular communication to find consensus concerning the vehicle's next actions;
Fig. 4 shows an example of two road side units that are communicatively coupled to close vehicles and a central server;
Fig. 5 shows an example of Vehicle Ad Hoc Peer-to-Peer Networks;
Fig. 6 schematically describes an example wherein, in a merging area of a road vehicles in a certain area get a rule on a smart contract and make a consensus of their behavior in a second area;
Fig. 7 schematically describes a method of providing a location based distributed ledger in the exemplifying scenario of Fig. 6;
Fig. 8 schematically describes an alternative method of providing a location based distributed ledger in the exemplifying scenario of Fig. 6;
Fig. 9 schematically describes an embodiment of an electronic device that may be used in context of the embodiments; and
Fig. 10 schematically describes a further use case in which the vehicles are delivery drones.

### DETAILED DESCRIPTION OF EMBODIMENTS

The embodiments disclose an electronic device that is configured as a host of a distributed ledger, the permission to access the distributed ledger being location based. A distributed ledger is a type of database that is spread across multiple sites. According to some embodiments, records are stored one after the other in a distributed ledger when the participants of the ledger reach consensus. A distributed ledger may for example store vehicular data, or the like. A distributed ledger may be used to allow for distributed transaction processing.

The electronic device may for example be a node of a network that hosts a distributed ledger. A node of the distributed ledger may store a full copy of the database, or it may store only parts of the database.

The electronic device may for example be integrated within a vehicle. The electronic device may for example be a processing unit that controls an autonomous driving system of a vehicle. Alternatively, the electronic device may be integrated in a road side unit. A road side unit may be located at the side of a road and control a defined section of the road, or it may be located near a crossing, or the like. In particular, the electronic device may be a server that is located, together with other servers, along a road.

The distributed ledger may be a shared ledger. A shared ledger refers to any database and application that is shared by a group of participants, or that is open to the public. A shared ledger may use a distributed ledger as its underlying database.

The electronic device may for example be a node of a Vehicular Ad Hoc Network. A Vehicular Ad Hoc Network can use any wireless networking technology as its basis. The most prominent are short range radio technologies like WLAN (either standard Wi-Fi or the vehicle-specific IEEE 802.11p), Bluetooth, Visible Light Communication (VLC), Infrared, and ZigBee. In addition, cellular technologies like UMTS, LTE, or WiMAX IEEE 802.16 can support VANETs, forming heterogeneous vehicular networks.

Permission to access the distributed ledger may depend on location. For example, the permission to access the distributed ledger may depend on physical closeness. For example, a vehicle group can be defined as a group of vehicles that are within a certain distance. Such a group of vehicles that are within a certain distance may establish a location based distributed ledger.

Alternatively, a vehicle may also be assigned to a group based on its distance to a road side unit. For instance, a vehicle may be assigned to group A if its closest road side unit is road side unit A.

Physical closeness may be verified by each of the current members of a distributed ledger. For example, the devices at a location may verify each other's physical closeness by means of radio communication, cameras (CCD, TOF etc.), and the like.

The electronic device may further be arranged to contribute to different ledgers as it moves from one location to another. A location based distributed ledger may thus rely not only on an absolute location, e.g. a location with reference to the fixed location of a road side unit, but it may also rely on relative position. In general, a location based distributed ledger may be considered as an independent group, i.e. the ledger is bound to a location or area. However, the users and devices move and are contributing to different ledgers as they move from one location to another.

Vehicles may disconnect and later connect again and then copy the ledger content.

According to some embodiments, the distributed ledger is designed as a block chain. A block chain is a type of database that takes a number of records and puts them in a block. Each block is then linked to the next block, using, e.g. a cryptographic signature. This allows block chains to be used like a ledger, which can be shared and corroborated by anyone with the appropriate permissions. A distributed ledger that is designed as a block chain may thus enable a distributed way to store location dependent vehicular data while having the advantages of a block chain (e.g. irreversibility).

The distributed ledger may be open to the public or may layer on permissions for different types of users. For example, police cars and ambulance cars may have higher permissions than private cars.

The distributed ledger may be a private permissioned ledger for a location. Permissioned ledgers may have one or many owners. When a new record is added, the ledger's integrity may be checked by a limited consensus process. This may be carried out by trusted actors - government departments, for example traffic authorities, police or the like. A permissioned block chain may provide highly-verifiable data sets because the consensus process creates a digital signature, which can be seen by all parties.

A distributed ledger may store vehicular communication data, in particular consensus information related to actions and behavior of vehicles. For example, a group of vehicles achieves consensus on their actions on the road. For this purpose, consensus may be achieved on the actions to be taken.

There are many ways to corroborate the accuracy of a ledger, but they are broadly known as consensus (the term 'mining' is used for a variant of this process in the cryptocurrency Bitcoin). The embodiments may use any of the known consensus techniques, for example a mining process. The length of longest chain may determine the ledger state. Still further, a Practical Byzantine Fault tolerance consensus protocol may be used as consensus mechanism.

According to some embodiments, the vehicles receive a smart contract that defines a basic rule for their behavior and they make a consensus of actual behaviors based on the basic rule by communicating with other vehicles in the area.

The vehicular communication data stored by the distributed ledger may comprise a smart contract between a group of vehicles. Smart contracts are contracts whose terms are recorded in a computer language instead of legal language. According to embodiments, smart contracts can be automatically executed by a computing system. By means of a location based distributed ledger, the electronic device may for example provide a behavioral rule distribution for automated vehicles with smart contracts stored in the distributed ledger which is accessible in a certain distance. Consensus may be recorded into a joint smart contract between the group of vehicles. For example, in a merging area of a road, the vehicles in a certain area may get a rule on smart contract and make a consensus of their behavior in the area.

Still further, using a smart contract, an ambulance vehicle may broadcast a rule to surrounding vehicles.

The distributed ledger may record geographical information, previous consensus results, and/or feedback on the execution of a smart contract. Such feedback may be used to assign priorities for future actions taken by vehicles. For instance, when a vehicle has not been able to execute the actions in the smart contract, the vehicle may be given a lower priority for future actions. Another option is that the vehicle owner pays a fine.

The smart contracts itself may include computer code that is used to verify if the behavior of the vehicles satisfies the actions specified in the smart contract. For this purpose, the computer code in the smart contract may contact other vehicles, and/or measurement equipment along the road to verify the behavior of vehicles.

The embodiments also disclose a system comprising nodes that are configured as hosts of a distributed ledger, the permission to access the distributed ledger being location based. The nodes may for example be nodes of one or more Vehicular Ad Hoc Networks. Still further, for each relevant location, a different block chain may be dynamically created. Nodes of the system may store a copy of a block chain for each of the different locations. When vehicles revisit a location, the block chain may be updated.

The architecture of the distributed ledger may scale up. However, the distributed ledger can also be used in a scenario where one or multiple nodes are central servers. A central server may for example store all the local block chains.

The embodiments also disclose a method of providing a distributed ledger, the permission to access the distributed ledger being location based.

Permission to access the distributed ledger may for example depend on physical closeness. For example, a group of vehicles may announce a smart contract to a nearest road side unit. A node of the distributed ledger may incorporate a smart contract into the ledger and may share the smart contract with other nodes. In such way all nodes may know the actions to be performed by all vehicles in an efficient and distributed manner.

The embodiments disclosed herein may also be used for fleet management of some vehicles, e.g. for fleet management of delivery drones, e.g. unmanned aerial vehicles (UAV) utilized to transport packages, food or other goods.

An additional use for a location based distributed ledger is envisioned for shops and shopping malls. A location based distributed ledger can be set up which is permissioned for shops in e.g. a shopping mall. Users may access the distributed ledger once they are close to the shopping mall. With access to the ledger users can directly buy and pay for products. Furthermore, advertising for products and corresponding discounts may be published on the block chain in the form of smart contracts. A user may also use a second distributed ledger, and assets may be transferred from this ledger to the location based distributed ledger. This is useful to pay for instance for products that are advertised on the location based ledger. Smart contracts can handle the interaction between these ledgers through the user that has received permission to access the location based distributed ledger.

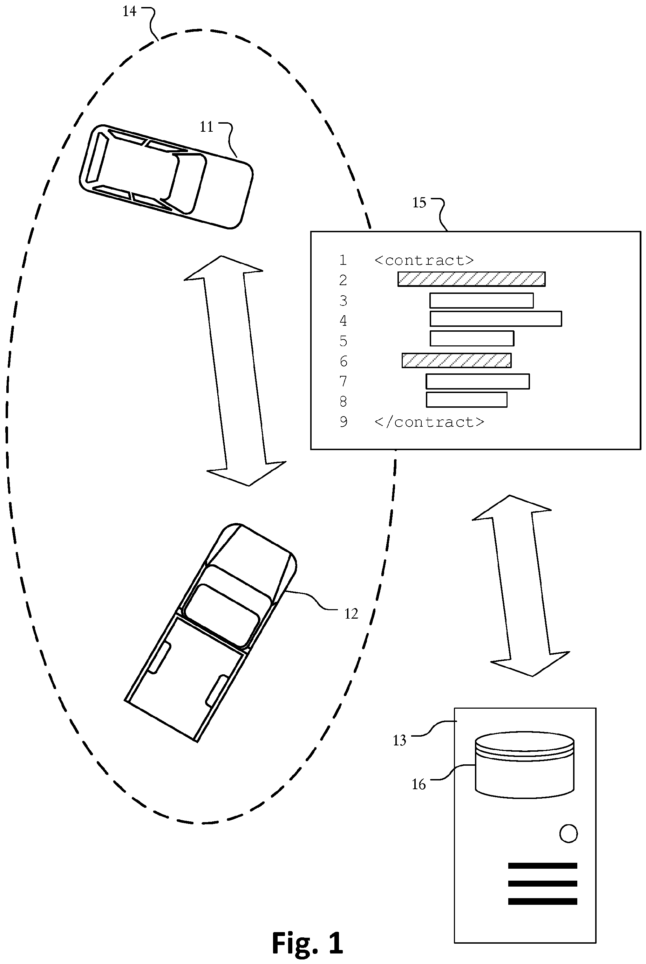

Fig. 1 describes an exemplifying situation in which two autonomous vehicles 11, 12 interact with each other and with a road side unit 13 via vehicular communication to find consensus concerning their next actions. The two autonomous vehicles 11, 12 meet each other at a location that is controlled by road side unit 13. The two vehicles 11, 12, when they are within the communication range of road side unit 13, form a location based group of vehicles 14. In order to increase driving safety, the two autonomous vehicles 11, 12 communicate with each other via vehicular communication. Here, for example, the two autonomous vehicles 11, 12 exchange their individual velocities and they decide that the faster vehicle has priority over the slower vehicle, i.e. that the slower vehicle will slow down to give the faster vehicle priority. They record this consensus concerning their next actions in a smart contract 15 and transmit this smart contract 15 to road side unit 13 that stores smart contract 15 in a location based distributed ledger 16.

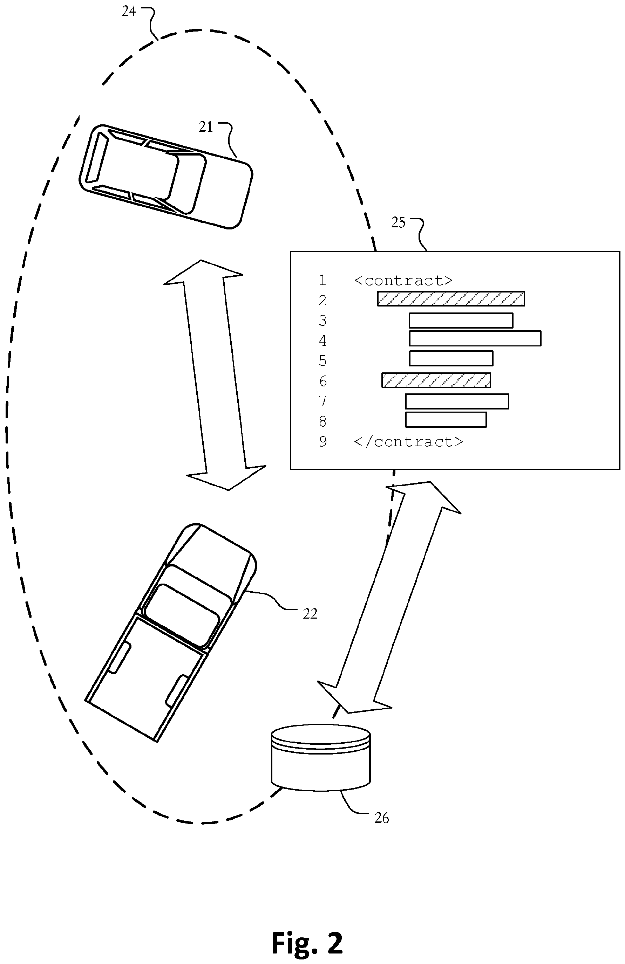

Fig. 2 describes an exemplifying situation in which two autonomous vehicles 21, 22 interact with each other via vehicular communication to find consensus concerning their next actions. The two autonomous vehicles 21, 22 meet each other at a location that is controlled by road side unit 23. The two vehicles 21, 22, when they are within the communication range of road side unit 23, form a location based group of vehicles 24. In order to increase driving safety, the two autonomous vehicles 21, 22 communicate with each other via vehicular communication. Here, for example, the two autonomous vehicles 21, 22 exchange their individual velocities and they decide that the faster vehicle has priority over the slower vehicle, i.e. that the slower vehicle will slow down to give the faster vehicle priority. They record this consensus concerning their next actions in a smart contract 25 and store smart contract 25 in a location based distributed ledger 26. Each autonomous vehicle comprises an own copy of this location based distributed ledger 26.

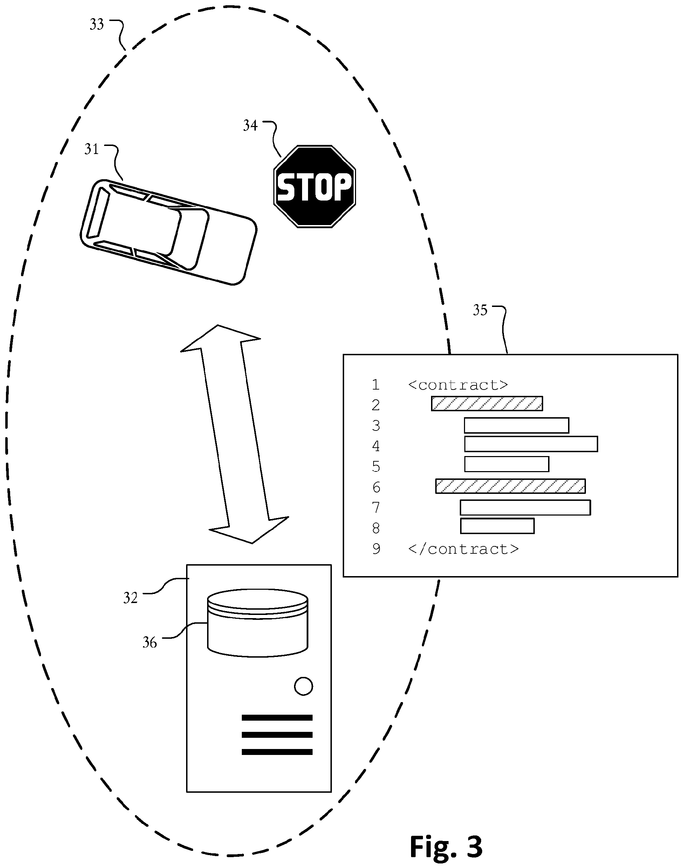

Fig. 3 describes a further exemplifying situation in which an autonomous vehicle 31 interacts with a road side unit 32 via vehicular communication to find consensus concerning the vehicle's next actions. The vehicle 31, when it is within the communication range of road side unit 32, is part of a location based group of vehicles 33 that is related to road side unit 32. Road side unit 32 controls a stop sign 34 that is located at a crossing situated within the region controlled by road side unit 32. In order to increase driving safety, the autonomous vehicle 31 communicates with road side unit 32 via vehicular communication. Here, for example, the autonomous vehicles 31 indicates to the road side unit 32 its geographical position and that it will stop at the stop sign 34. Autonomous vehicle 31 and road side unit 32 record this consensus concerning the vehicle's next action in a smart contract 35 and road side unit 32 stores this smart contract 35 in a location based distributed ledger 36.

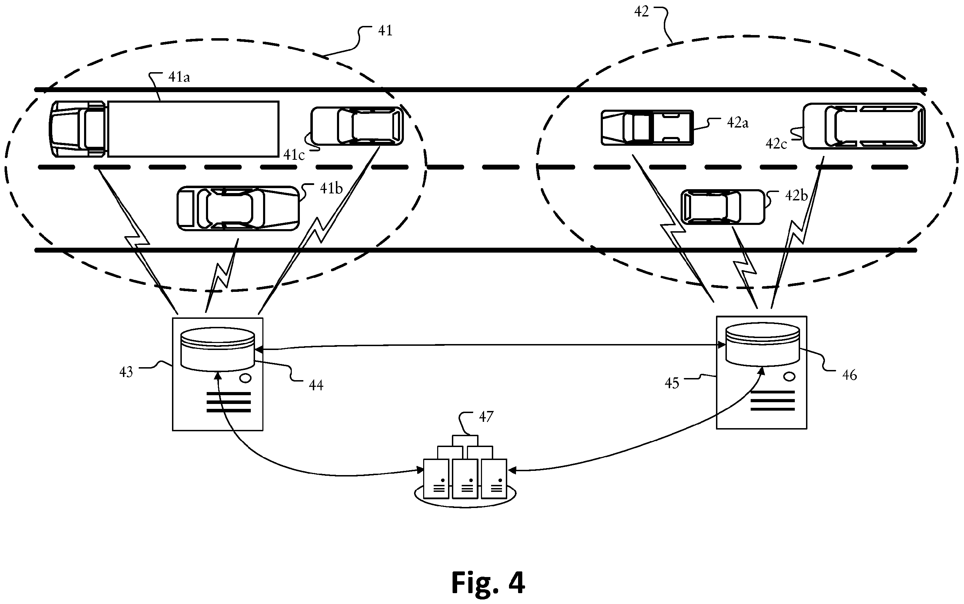

Fig. 4 shows an example of two road side units that are communicatively coupled to close vehicles and a central server. A vehicle group 41 consisting of three vehicles 41a, 41b, and 41c and a vehicle group 42 consisting of three vehicles 42a, 42b, and 42c is shown. Each of these vehicle groups 41, 42 may obtain consensus on the next actions to be taken on the road, and announce the consensus in the form of a smart contract to the nearest road side unit. Vehicle group 41 announces the consensus to road side unit 43. Vehicle group 42 announces the consensus to road side unit 45. Road side unit 43 and road side unit 45 are communicatively coupled to each other and share a distributed ledger 44, 46. The permission to access the distributed ledger 44, 46 depends on physical closeness to the respective road side unit. Road side unit 43 and road side unit 45 are communicatively coupled to a central server 47. Central server 47 stores a full copy of the distributed ledger covering all data obtained from all road side units of the complete system, e.g. a full block chain. Road side unit 43 and road side unit 45 need not store a full copy of the distributed ledger.

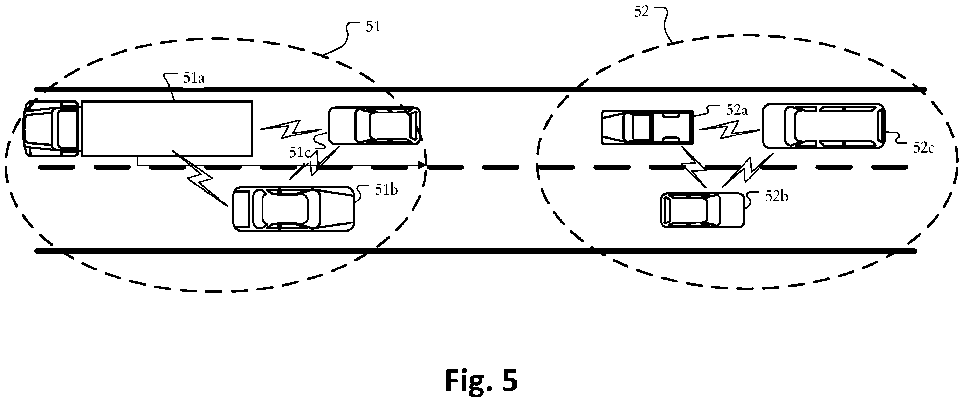

Fig. 5 shows an example of Vehicle Ad Hoc Peer-to-Peer Networks. A vehicle group 51 consisting of three vehicles 51a, 51b, and 51c and a vehicle group 52 consisting of three vehicles 52a, 52b, and 52c are formed via vehicular communication. Each of these vehicle groups may obtain consensus on the next actions to be taken on the road, and announces the consensus in the form of a smart contract to the other vehicles in the group. Vehicle group 51 stores smart contracts in a location based distributed ledger that is distributed over vehicles 51a, 51b and 51c. Vehicle group 52 stores smart contracts in a location based distributed ledger that is further distributed over vehicles 52a, 52b and 52c. The permission to access a distributed ledger depends on physical closeness of the vehicles to each other. The two vehicle groups 51 and 52 thus form Vehicular Λd Hoc Networks. Vehicles 51a, 51b, and 51c are nodes of a first Vehicular Ad Hoc Network related to vehicle group 51. Vehicles 52a, 52b, and 52c are nodes of a second Vehicular Ad Hoc Network related to vehicle group 52. Each of the Vehicular Ad Hoc Networks can be seen as an Ad Hoc Peer-to-Peer Network. According to this example, there are no road side units or central servers involved in the storage of the distributed ledger. However, in alternative embodiments, also road side units and/or central servers may participate in the Vehicular Ad Hoc Networks.

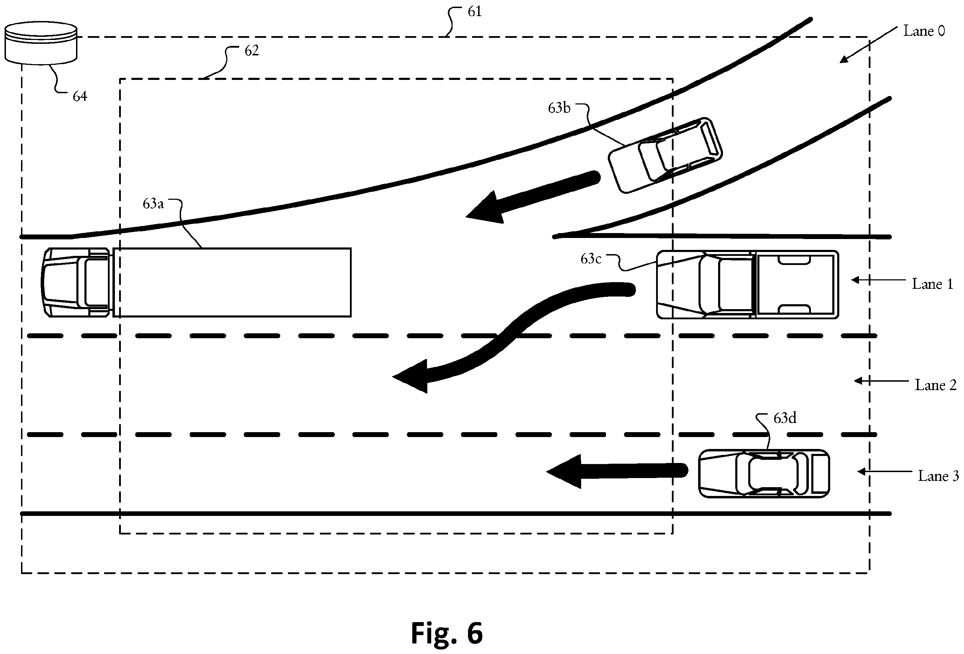

Fig. 6 schematically describes an example wherein, in a merging area of a road, vehicles 63a-d in a certain first area 61 get a rule on a smart contract and make a consensus of their behavior in a second area 62. In the merging area of the road, there exist four lanes, lane0, lane1, lane2, and lane3. To make a consensus of their behavior in the second area 62, the vehicles 63a-d decide, e.g. which of the vehicles may enter in the first area 61 within a certain period of time. Still further, the vehicles 63a-d decide by when the vehicles 63a-d may enter in the second area 62. Still further, the vehicles 63a-d determine behaviors of each vehicle in the second area 62. In the case of the merging area of road, there is a road side unit associated with the first area 61 that stores a database 64 that covers the first area 61 or outskirts of the first area 61. This database stores smart contracts to provide the basic rule of the behavior in the second area 62. By means of a smart contract vehicles in the first area 61 must participate in a process to make a consensus about their behaviors in second area. In the second area 62 vehicles have to follow a determined-behavior based on the consensus they found in the first area 61. The database has a memory storing geographical information concerning the vehicles (e.g. location of the vehicles, whether or not they are inside the first and/or second area, etc.), smart contracts, and previous consensus results. A smart contract comprises a basic rule of the behavior in the second area 62 and an advanced rule.

An example of a basic rule defines that a) the faster vehicle has a priority, b) that the smaller number lane has a priority (e.g. 15 sec), c) that a vehicle has to change the speed to pass the second area 62 with keeping a certain distance to each other (e.g. 50m), and that d) a vehicle only can change the lane to the upper number lane if necessary.

An example of an advanced rule defines a) an arrangement based on the previous consensus result and b) emergent situations and the retrieval.

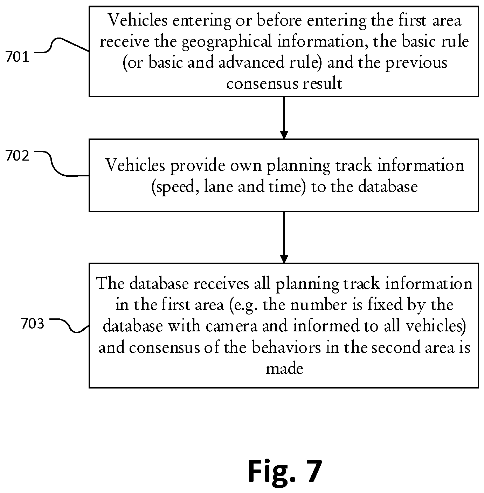

Fig. 7 schematically describes a method of providing a location based distributed ledger in the exemplifying scenario of Fig. 6. At 701, vehicles entering or before entering the first area receive the geographical information, the basic rule (or basic and advanced rule) and the previous consensus result. At 702, the vehicles provide own planning track information (speed, lane and time) to the database. At 703 the database receives all planning track information in the first area (e.g. the number is fixed by the database with a camera and informed to all vehicles) and consensus of the behaviors in the second area is made.

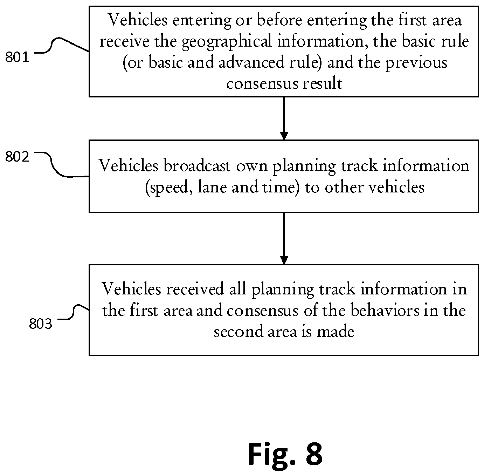

Fig. 8 schematically describes an alternative method of providing a location based distributed ledger in the exemplifying scenario of Fig. 6. At 801, vehicles entering or before entering the first area receive the geographical information, the basic rule (or basic and advanced rule) and the previous consensus result. At 802, the vehicles broadcast own planning track information (speed, lane and time) to all other vehicles. At 803, the vehicles receive all planning track information in the first area 61 (e.g. the number is fixed by the database with a camera and informed to all vehicles) and make a consensus of the behaviors in the second area 62.

A smart contract on the database may be stored on a block chain and may connect to the Private or Consortium type block chain network maintained by a few controllers like an authority and trusted entity, e.g. a traffic authority or a financial institute. Multi-signatures of the controllers are required to change the smart contract.

The geographical information may be updated by a part of the road side unit.

The previous consensus result may be stored in the database with a signature of the database after making a consensus, and may optionally be provided to vehicles entering or before entering in the first area to be used for calculating own planning track information at each vehicle.

All vehicles may have a distributed ledger which is interoperable with the block chain network of the smart contract, or create a distributed ledger with the contract to the database as a turning point.

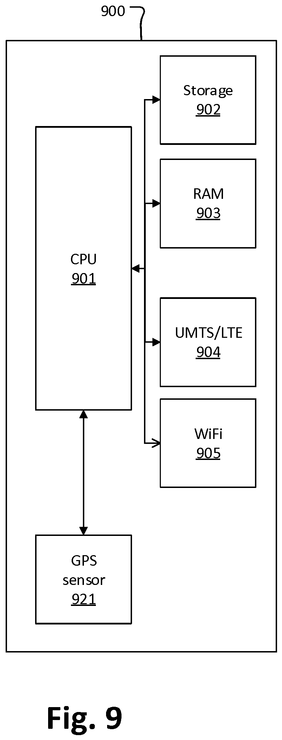

Fig. 9 schematically describes an embodiment of an electronic device 900 that may be used in context of the embodiments. The electronic device 900 comprises a CPU 901 as processor. The electronic device 900 further comprises an UMTS/LTE interface 904 and a WiFi-interface 905. These units 904, 905 act as I/O interfaces for data communication with external devices such as for car-to-car communication or for communication between a car and a road side unit. The electronic device 900 further comprises a GPS sensor 921 for obtaining location information. The electronic device 900 further comprises a data storage 902 (e.g. a hard drive or solid state drive) and a data memory 903 (e.g. a RAM). The data memory 903 is arranged to store or cache data or computer instructions for processing by processor 901. The data storage 902 is arranged as a storage for a distributed ledger.

It should be noted that the description above is only an example configuration. Alternative configurations may be implemented with additional or other sensors, storage devices, interfaces or the like. For example, in alternative embodiments, the processor 901 may also be coupled to further sensors that are used in automated or autonomous driving such as CCD cameras, TOF cameras, or the like.

A road side unit may have a similar structure as that disclosed in Fig. 9. In addition or alternatively to the I/O interfaces 904, 905 in Fig. 9 a server acting as road side unit may also be connected to other road side interfaces or to a central server by means of Ethernet connections. Still further, a road side unit that has a static location must not necessarily include a GPS sensor such as 921 in Fig. 9. The static location of a road side unit may also be preconfigured in the unit.

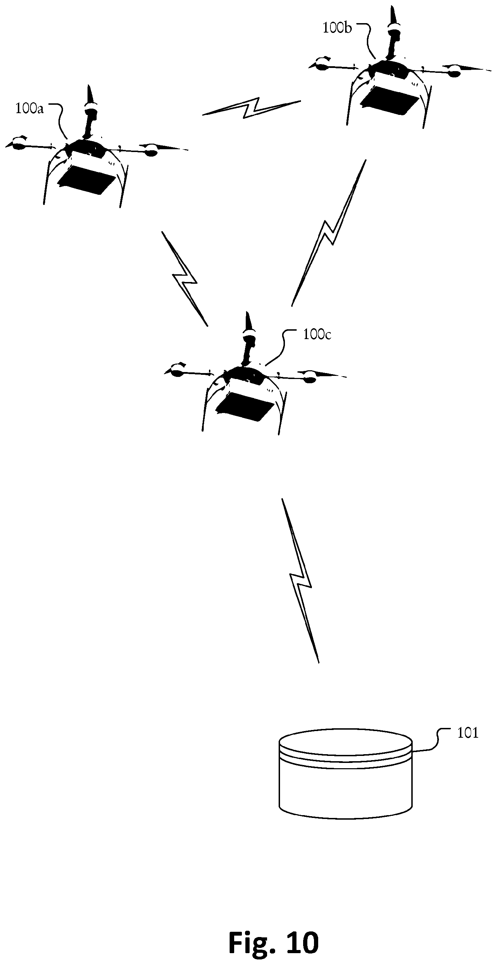

Fig. 10 schematically describes a further use case in which the vehicles are delivery drones. Three delivery drones 100a, 100b, 100c interact via vehicle communication. The delivery drones find consensus concerning their flight paths and flight behavior and store this consensus in a database 101. The database 101 may be a distributed ledger, e.g. a block chain. The block chain may be used to record consensus in the form of smart contracts. Still further, the database may be used to record transactions related to actions such as picking up and/or loading off parcels. The delivery drones may form Peer-to-Peer Ad Hoc Networks, or they may interact with ground based units (just as cars interact with road side units) and central servers, or use combinations of these techniques.

A distributed ledger may also be used for fleet management of some vehicles, e.g. for fleet management of delivery drones, e.g. unmanned aerial vehicles (UAV) utilized to transport packages, food or other goods.

It should be recognized that the embodiments describe methods with an exemplary ordering of method steps. The specific ordering of method steps is however given for illustrative purposes only and should not be construed as binding.

It should further be recognized that the division of the electronic device into units (such as exemplified in Fig. 9) is only made for illustration purposes and that the present disclosure is not limited to any specific division of functions in specific units.

In the embodiments described above, a method for controlling an electronic device, such as a digital camera device is described. The method can also be implemented as a computer program causing a computer and/or a processor to perform the method, when being carried out on the computer and/or processor. In some embodiments, also a non-transitory computer-readable recording medium is provided that stores therein a computer program product, which, when executed by a processor, such as the processor described above, causes the method described to be performed.

All units and entities described in this specification and claimed in the appended claims can, if not stated otherwise, be implemented as integrated circuit logic, for example on a chip, and functionality provided by such units and entities can, if not stated otherwise, be implemented by software. For example, CPU 201 of the embodiment of Fig. 9 may be implemented by a respective programmed processor, field programmable gate array (FPGA), or the like.

In so far as the embodiments of the disclosure described above are implemented, at least in part, using a software-controlled data processing apparatus, it will be appreciated that a computer program providing such software control and a transmission, storage or other medium by which such a computer program is provided are envisaged as aspects of the present disclosure.

## Claims

1. A system (41; 42; 51; 52) for providing a location based distributed ledger (16; 26; 36; 44; 46) for a vehicle group (41; 42; 51; 52) comprising multiple vehicles (41a, 41b, 41c; 42a, 42b, 42c; 51a, 51b, 51c; 52a, 52b, 52c)
wherein the multiple vehicles (41a, 41b, 41c; 42a, 42b, 42c; 51a, 51b, 51c; 52a, 52b, 52c) are configured as hosts of the location based distributed ledger (16; 26; 36; 44; 46),
the permission to access the location based distributed ledger (16; 26; 36; 44; 46) by the vehicle group (41; 42; 51; 52), depends on physical closeness of the multiple vehicles (41a, 41b, 41c; 42a, 42b, 42c; 51a, 51b, 51c; 52a, 52b, 52c) to each other,
wherein the multiple vehicles, (41a, 41b, 41c; 42a, 42b, 42c; 51a, 51b, 51c; 52a, 52b, 52c) when being physically close to each other, obtain consensus on next actions to be taken on the road, and announce the consensus in a smart contract (15; 25; 25), and
wherein each vehicle of the vehicle group (41; 42; 51; 52) stores the smart contract (15; 25; 25)in the location based distributed ledger (16; 26; 36; 44; 46) and executes the next actions specified in the smart contract (15; 25; 25).

2. The system (41; 42; 51; 52) of claim 1, wherein a vehicle is assigned to the distributed ledger (16; 26; 36; 44; 46) based on its distance to a road side unit (43; 45), wherein the assignment is made via wireless networking technology.

3. The system (41; 42; 51; 52) of claim 1, wherein the physical closeness is verified by each of a plurality of members of a distributed ledger (16; 26; 36; 44; 46).

4. The system (41; 42; 51; 52) of claim 1, wherein the vehicles (41a; 41b; 41c; 42a; 42b; 42c; 51a; 51b; 51c; 52a; 52b; 52c) are further arranged to contribute to different ledgers as it moves from one location to another.

5. The system of claim 1, wherein the distributed ledger (16; 26; 36; 44; 46) is designed as a block chain.

6. The system (41; 42; 51; 52) of claim 1, wherein the distributed ledger (16; 26; 36; 44; 46) is a private permissioned ledger for a location.

7. The system (41; 42; 51; 52) of claim 1, wherein the distributed ledger (16; 26; 36; 44; 46) stores vehicular communication data, wherein the vehicular communication data stored by the distributed ledger (16; 26; 36; 44; 46) comprises consensus information.

8. The system (41; 42; 51; 52) of claim 1, wherein the smart contract (15; 25; 25) defines a basic rule for the behavior of the group of vehicles (41; 42; 51; 52) in a defined area.

9. The system (41; 42; 51; 52) of claim 1, wherein the distributed ledger (16; 26; 36; 44; 46) is configured to record geographical information, previous consensus results, and/or feedback on the execution of a smart contract (15; 25; 25).

10. The system (41; 42; 51; 52) of claim 1, wherein the smart contract (15; 25; 25) is configured to specify computer code that is used to verify if the behavior of vehicles in the group of vehicles (41; 42; 51; 52) satisfies actions specified in the smart contract (15; 25; 25).

11. The system (41; 42; 51; 52) of claim 1, wherein, for each relevant location, a different block chain is dynamically created.

12. A method of providing a location based distributed ledger (16; 26; 36; 44; 46) for a vehicle group (41; 42; 51; 52) comprising multiple vehicles (41a, 41b, 41c; 42a, 42b, 42c; 51a, 51b, 51c; 52a, 52b, 52c), wherein the multiple vehicles (41a, 41b, 41c; 42a, 42b, 42c; 51a, 51b, 51c; 52a, 52b, 52c) are configured as hosts of the location based distributed ledger (16; 26; 36; 44; 46),
the permission to access the location based distributed ledger (16; 26; 36; 44; 46) by the vehicle group (41; 42; 51; 52) depending on physical closeness of the multiple vehicles (41a, 41b, 41c; 42a, 42b, 42c; 51a, 51b, 51c; 52a, 52b, 52c) to each other,
the multiple vehicles (41a, 41b, 41c; 42a, 42b, 42c; 51a, 51b, 51c; 52a, 52b, 52c) when being physically close obtaining consensus on next actions to be taken on the road, and
announcing the consensus in a smart contract (15; 25; 25), and
each vehicle (41a, 41b, 41c; 42a, 42b, 42c; 51a, 51b, 51c; 52a, 52b, 52c) of the vehicle group (41; 42; 51; 52) storing the smart contract (15; 25; 25) in the location based distributed ledger (16; 26; 36; 44; 46) and executing the next actions specified in the smart contract (15; 25; 25).

## Patentansprüche

1. System (41; 42; 51; 52) zum Bereitstellen eines ortsbasierten verteilten Hauptbuchs (16; 26; 36; 44; 46) für eine Fahrzeuggruppe (41; 42; 51; 52), die mehrere Fahrzeuge (41a, 41b, 41c; 42a, 42b, 42c; 51a, 51b, 51c; 52a, 52b, 52c) umfasst,
wobei die mehreren Fahrzeuge (41a, 41b, 41c; 42a, 42b, 42c; 51a, 51b, 51c; 52a, 52b, 52c) als Hosts des ortsbasierten verteilten Hauptbuchs (16; 26; 36; 44; 46) konfiguriert sind,
die Genehmigung zum Zugreifen auf das ortsbasierte verteilte Hauptbuch (16; 26; 36; 44; 46) durch das Fahrzeug (41; 42; 51; 52) von der physikalischen Nähe der mehreren Fahrzeuge (41a, 41b, 41c; 42a, 42b, 42c; 51a, 51b, 51c; 52a, 52b, 52c) zueinander abhängt,
wobei die mehreren Fahrzeuge, (41a, 41b, 41c; 42a, 42b, 42c; 51a, 51b, 51c; 52a, 52b, 52c), wenn sie physikalisch nahe zueinander sind, Konsens über die nächsten Maßnahmen, die auf der Straße zu ergreifen sind, erlangen und den Konsens in einem intelligenten Vertrag (15; 25; 25) bekannt geben und
wobei jedes Fahrzeug der Fahrzeuggruppe (41; 42; 51; 52) den intelligenten Vertrag (15; 25; 25) in dem ortsbasierten verteilten Hauptbuch (16; 26; 36; 44; 46) speichert und die in dem intelligenten Vertrag (15; 25; 25) spezifizierten nächsten Maßnahmen ausführt.

2. System (41; 42; 51; 52) nach Anspruch 1, wobei ein Fahrzeug dem verteilten Hauptbuch (16; 26; 36; 44; 46) basierend auf seiner Distanz zu einer Straßenrandeinheit (43; 45) zugewiesen wird, wobei die Zuweisung über drahtlose Netzwerktechnologie durchgeführt wird.

3. System (41; 42; 51; 52) nach Anspruch 1, wobei die physikalische Nähe durch jedes einer Vielzahl von Mitgliedern eines verteilten Hauptbuchs (16; 26; 36; 44; 46) verifiziert wird.

4. System (41; 42; 51; 52) nach Anspruch 1, wobei die Fahrzeuge (41a; 41b; 41c; 42a; 42b; 42c; 51a; 51b; 51c; 52a; 52b; 52c) ferner angeordnet sind, zu verschiedenen Hauptbüchern beizutragen, während es sich von einem Ort zu einem anderen bewegt.

5. System nach Anspruch 1, wobei das verteilte Hauptbuch (16; 26; 36; 44; 46) als eine Blockchain konstruiert ist.

6. System (41; 42; 51; 52) nach Anspruch 1, wobei das verteilte Hauptbuch (16; 26; 36; 44; 46) ein privat zugelassenes Hauptbuch für einen Ort ist.

7. System (41; 42; 51; 52) nach Anspruch 1, wobei das verteilte Hauptbuch (16; 26; 36; 44; 46) Fahrzeugkommunikationsdaten speichert, wobei die durch das verteilte Hauptbuch (16; 26; 36; 44; 46) gespeicherten Fahrzeugkommunikationsdaten Konsensinformationen umfassen.

8. System (41; 42; 51; 52) nach Anspruch 1, wobei der intelligente Vertrag (15; 25; 25) eine grundlegende Regel für das Verhalten der Gruppe von Fahrzeugen (41; 42; 51; 52) in einem definierten Gebiet definiert.

9. System (41; 42; 51; 52) nach Anspruch 1, wobei das verteilte Hauptbuch (16; 26; 36; 44; 46) konfiguriert ist, geografische Informationen, frühere Konsensergebnisse und/oder Rückmeldung über die Ausführung eines intelligenten Vertrags (15; 25; 25) aufzuzeichnen.

10. System (41; 42; 51; 52) nach Anspruch 1, wobei der intelligente Vertrag (15; 25; 25) konfiguriert ist, Computercode zu spezifizieren, der verwendet wird, zu verifizieren, ob das Verhalten von Fahrzeugen in der Gruppe von Fahrzeugen (41; 42; 51; 52) in dem intelligenten Vertrag (15; 25; 25) spezifizierten Maßnahmen entspricht.

11. System (41; 42; 51; 52) nach Anspruch 1, wobei für jeden relevanten Ort eine verschiedene Blockchain dynamisch erzeugt wird.

12. Verfahren zum Bereitstellen eines ortsbasierten verteilten Hauptbuchs (16; 26; 36; 44; 46) für eine Fahrzeuggruppe (41; 42; 51; 52), die mehrere Fahrzeuge (41a, 41b, 41c; 42a, 42b, 42c; 51a, 51b, 51c; 52a, 52b, 52c) umfasst, wobei die mehreren Fahrzeuge (41a, 41b, 41c; 42a, 42b, 42c; 51a, 51b, 51c; 52a, 52b, 52c) als Hosts des ortsbasierten verteilten Hauptbuchs (16; 26; 36; 44; 46) konfiguriert sind,
wobei die Genehmigung zum Zugreifen auf das ortsbasierte verteilte Hauptbuch (16; 26; 36; 44; 46) durch die Fahrzeuggruppe (41; 42; 51; 52) von physikalischer Nähe der mehreren Fahrzeuge (41a, 41b, 41c; 42a, 42b, 42c; 51a, 51b, 51c; 52a, 52b, 52c) zueinander abhängt,
wobei die mehreren Fahrzeuge (41a, 41b, 41c; 42a, 42b, 42c; 51a, 51b, 51c; 52a, 52b, 52c), wenn sie physikalisch nahe sind, Konsens über die nächsten Maßnahmen, die auf der Straße durchzuführen sind, erlangen und
den Konsens in einem intelligenten Vertrag (15; 25; 25) bekanntgeben und
jedes Fahrzeug (41a, 41b, 41c; 42a, 42b, 42c; 51a, 51b, 51c; 52a, 52b, 52c) der Fahrzeuggruppe (41; 42; 51; 52) den intelligenten Vertrag (15; 25; 25) in dem ortsbasierten verteilten Hauptbuch (16; 26; 36; 44; 46) speichert und die in dem intelligenten Vertrag (15; 25; 25) spezifizierten nächsten Maßnahmen ausführt.

## Revendications

1. Système (41 ; 42 ; 51 ; 52) pour fournir un registre distribué basé sur emplacement (16 ; 26 ; 36 ; 44 ; 46) pour un groupe de véhicules (41 ; 42 ; 51 ; 52) comprenant des véhicules multiples (41a, 41b, 41c ; 42a, 42b, 42c ; 51a, 51b, 51c ; 52a, 52b, 52c),
ces véhicules multiples (41a, 41b, 41c ; 42a, 42b, 42c ; 51a, 51b, 51c ; 52a, 52b, 52c) étant configurés comme des hôtes du registre distribué basé sur emplacement (16 ; 26 ; 36 ; 44 ; 46),
la permission d'accéder au registre distribué basé sur emplacement (16 ; 26 ; 36 ; 44 ; 46) par le groupe de véhicules (41 ; 42 ; 51 ; 52) dépendant de la proximité physique des véhicules multiples (41a, 41b, 41c ; 42a, 42b, 42c ; 51a, 51b, 51c ; 52a, 52b, 52c) les uns par rapport aux autres,
les véhicules multiples (41a, 41b, 41c ; 42a, 42b, 42c ; 51a, 51b, 51c ; 52a, 52b, 52c), lorsqu'ils sont physiquement proches les uns des autres, obtenant un consensus sur les actions suivantes devant être prises sur la route, et annonçant ce consensus dans un contrat intelligent (15 ; 25 ; 25), et
chaque véhicule du groupe de véhicules (41 ; 42 ; 51 ; 52) stockant le contrat intelligent (15 ; 25 ; 25) dans le registre distribué basé sur emplacement (16 ; 26 ; 36 ; 44 ; 46) et exécutant les actions suivantes spécifiées par le contrat intelligent (15 ; 25 ; 25).

2. Système (41 ; 42 ; 51 ; 52) selon la revendication 1, dans lequel un véhicule est attribué au registre distribué basé sur emplacement (16 ; 26 ; 36 ; 44 ; 46) en se basant sur sa distance d'une unité située au bord de la route (43 ; 45), cette attribution étant faite au moyen d'une technologie de réseautage sans fil.

3. Système (41 ; 42 ; 51 ; 52) selon la revendication 1, dans lequel la proximité physique est vérifiée par chacun d'une pluralité d'éléments d'un registre distribué (16 ; 26 ; 36 ; 44 ; 46) .

4. Système (41 ; 42 ; 51 ; 52) selon la revendication 1, dans lequel les véhicules (41a ; 41b ; 41c ; 42a ; 42b ; 42c ; 51a ; 51b ; 51c ; 52a ; 52b ; 52c) sont disposés en outre de façon à contribuer à différents registres tandis qu'ils bougent d'un emplacement à un autre.

5. Système selon la revendication 1, dans lequel le registre distribué (16 ; 26 ; 36 ; 44 ; 46) est conçu comme une chaîne de blocs.

6. Système (41 ; 42 ; 51 ; 52) selon la revendication 1, dans lequel le registre distribué (16 ; 26 ; 36 ; 44 ; 46) est un registre autorisé privé pour un emplacement.

7. Système (41 ; 42 ; 51 ; 52) selon la revendication 1, dans lequel le registre distribué (16 ; 26 ; 36 ; 44 ; 46) stocke des données de communication véhiculaire, ces données de communication véhiculaire stockées par le registre distribué (16 ; 26 ; 36 ; 44 ; 46) comprenant des informations de consensus.

8. Système (41 ; 42 ; 51 ; 52) selon la revendication 1, dans lequel le contrat intelligent (15 ; 25 ; 25) définit une règle de base pour le comportement du groupe de véhicules (41 ; 42 ; 51 ; 52) dans une zone définie.

9. Système (41 ; 42 ; 51 ; 52) selon la revendication 1, dans lequel le registre distribué (16 ; 26 ; 36 ; 44 ; 46) est configuré de façon à enregistrer des informations géographiques, des résultats de consensus antérieurs et/ou des commentaires sur l'exécution d'un contrat intelligent (15 ; 25 ; 25).

10. Système (41 ; 42 ; 51 ; 52) selon la revendication 1, dans lequel le contrat intelligent (15 ; 25 ; 25) est configuré de façon à spécifier un code informatique qui est utilisé pour vérifier si le comportement de véhicules dans le groupe de véhicules (41 ; 42 ; 51 ; 52) satisfait les actions spécifiées dans le contrat intelligent (15 ; 25 ; 25).

11. Système (41 ; 42 ; 51 ; 52) selon la revendication 1, dans lequel, pour chaque emplacement pertinent, une chaîne de blocs différente est créée dynamiquement.

12. Procédé pour fournir un registre distribué basé sur emplacement (16 ; 26 ; 36 ; 44 ; 46) pour un groupe de véhicules (41 ; 42 ; 51 ; 52) comprenant des véhicules multiples (41a, 41b, 41c ; 42a, 42b, 42c ; 51a, 51b, 51c ; 52a, 52b, 52c), ces véhicules multiples (41a, 41b, 41c ; 42a, 42b, 42c ; 51a, 51b, 51c ; 52a, 52b, 52c) étant configurés comme des hôtes pour le registre distribué basé sur emplacement (16 ; 26 ; 36 ; 44 ; 46) ;
la permission d'accéder au registre distribué basé sur emplacement (16 ; 26 ; 36 ; 44 ; 46) par le groupe de véhicules (41 ; 42 ; 51 ; 52) dépendant de la proximité physique des véhicules multiples (41a, 41b, 41c ; 42a, 42b, 42c ; 51a, 51b, 51c ; 52a, 52b, 52c) les uns par rapport aux autres,
les véhicules multiples (41a, 41b, 41c ; 42a, 42b, 42c ; 51a, 51b, 51c ; 52a, 52b, 52c), lorsqu'ils sont physiquement proches les uns des autres, obtenant un consensus sur les actions suivantes devant être prises sur la route, et
annonçant ce consensus dans un contrat intelligent (15 ; 25 ; 25), et
chaque véhicule (41a, 41b, 41c ; 42a, 42b, 42c ; 51a, 51b, 51c ; 52a, 52b, 52c) du groupe de véhicules (41 ; 42 ; 51 ; 52) stockant le contrat intelligent (15 ; 25 ; 25) dans le registre distribué basé sur emplacement (16 ; 26 ; 36 ; 44 ; 46) et exécutant les actions suivantes spécifiées par le contrat intelligent (15 ; 25 ; 25).
